# FASCICULE DE BREVET EUROPEEN

(11) **EP 1 659 059 B1**
(45) Date de publication et mention de la délivrance du brevet: **02.01.2008**
(21) Numéro de dépôt: 05111104.5
(22) Date de dépôt: 22.11.2005
(51) Int. Cl.: B64D 1/02

(54) **Système d'accrochage d'une charge à un aéronef**
Vorrichtung zum Befestigen einer Nutzlast an ein Flugzeug
Device for attaching a payload to an aircraft

(30) Priorité: 23.11.2004 FR 0452728
(43) Date de publication de la demande: 24.05.2006
(73) Titulaire: MBDA France, 75016 Paris (FR)
(72) Inventeur: Bohas, Jean-Claude, 92140 Clamart (FR); Rauscher, Etienne, 92120 Montrouge (FR); Gassemann, Pierre, 18400 Saint Florent sur Cher (FR)
(74) Mandataire: Poulin, Gérard

(56) Documents cités:
- FR-A- 1 178 336
- FR-A- 2 623 163
- US-A- 3 887 150

## Description

Le sujet de cette invention est un dispositif d'accrochage d'une charge à un aéronef.

Un tel dispositif est illustré par le document FR-A-2 623 163.

On s'intéresse aux dispositifs d'accrochage comprenant une possibilité de largage de la charge en vol. Ils doivent assurer la liaison de la charge avec une précontrainte déterminée pour retenir la charge avec un niveau de sécurité élevé et permettre le déverrouillage sous cette précontrainte.

Le moyen de verrouillage peut comprendre un fourreau logeant un cercle de billes à sa périphérie et dans lequel coulisse un piston présentant successivement deux sections différentes permettant respectivement de faire saillir les billes hors du fourreau ou de permettre de les y faire rentrer. Le bout du fourreau et les billes entrent dans un logement ménagé dans la charge. Quand les billes sont saillantes, elles s'étendent sous une collerette à l'ouverture du logement, y retiennent le fourreau, mais elles permettent sa libération quand elles sont rentrées. La précontrainte est assurée par la déformation élastique obtenue en tirant le fourreau à l'état saillant des billes quand elles sont dans le logement et que la charge repose sur des appuis fixes environnants : l'effort de traction exercé dans le fourreau passe par les billes, la collerette, et l'enveloppe de la charge, jusqu'aux appuis.

Dans la technique comme, il apparaît qu'il est difficile de produire une précontrainte à une valeur déterminée assurant la tenue ferme de la charge tout en lui permettant d'être déverrouillée, et que le système actuel pour maintenir le verrouillage de la charge pendant le vol ne donne pas non plus entière satisfaction.

Un dispositif connu de mise en précontrainte comprend un écrou coaxial au fourreau, dont la rotation élève celui-ci grâce à une liaison mutuelle par filetage. Une vis sans fin est utilisée pour donner un accès à l'extérieur et permettre de produire le mouvement de l'écrou. Même en utilisant une clé dynamométrique pour tourner la vis, l'opérateur ne peut pas déterminer la précontrainte appliquée entre les billes et la collerette de la charge avec une précision suffisante, puisque cette précontrainte dépend non seulement de l'effort ou du déplacement appliqué par l'opérateur à la vis sans fin, mais des jeux à rattraper, des frottements, etc. dans le mécanisme menant à la charge et aussi de la déformation de la charge elle-même quand elle est soumise à la précontrainte. Tous ces facteurs sont difficiles ou impossibles à connaître avec précision, ne sont pas identiques d'un système d'accrochage à un autre et peuvent d'ailleurs changer dans un même système d'après les sollicitations thermiques ou le fluage des matériaux mis en jeu.

Un système de verrouillage traditionnel comprend un mécanisme de bielles formant une genouillère en appui sur une surface de butée. Un ressort maintient l'appui en repoussant la genouillère dans la position de butée. Le piston est relié à un levier basculant dont l'autre bout est pris dans la genouillère, de sorte qu'un déverrouillage est rendu impossible tant que la butée de la genouillère est maintenue. Un mouvement latéral peut cependant être imposé à une des bielles de la genouillère pour vaincre la poussée du ressort, lever la butée et finalement provoquer un déclic de la genouillère qui libère le levier et permet le déverouillage. On peut cependant craindre qu'un choc, par exemple, ne produise accidentellement le même résultat.

L'invention a pour sujet un dispositif d'accrochage amélioré d'une charge à un aéronef, où la précontrainte est assurée de façon sûre à une bonne valeur par un mécanisme nouveau. Plus précisément, l'écrou chargé de l'élévation du fourreau n'est plus en liaison filetée directe avec le fourreau lui-même mais avec un manchon au plateau supérieur portant un ressort de compression, et un couvercle solidaire du fourreau couvre le ressort de compression.

En outre, le mécanisme de déverrouillage, est original surtout en ce que la translation du piston dans le fourreau est assurée par une tirette à rainure oblique engagée dans une entaille du fourreau et recevant un tenon fixé au piston. Ce mécanisme est parfaitement rigide à l'égard des vibrations et des chocs et ne change d'état qu'après un mouvement de translation important commandé par le mécanisme prévu à cet effet, avec des risques d'accident bien moindres.

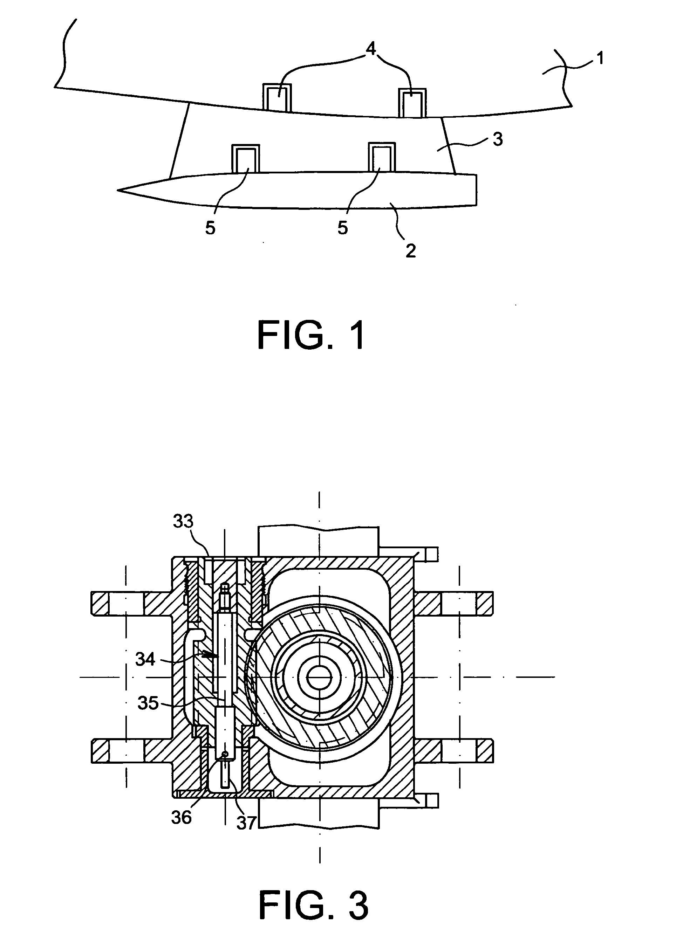

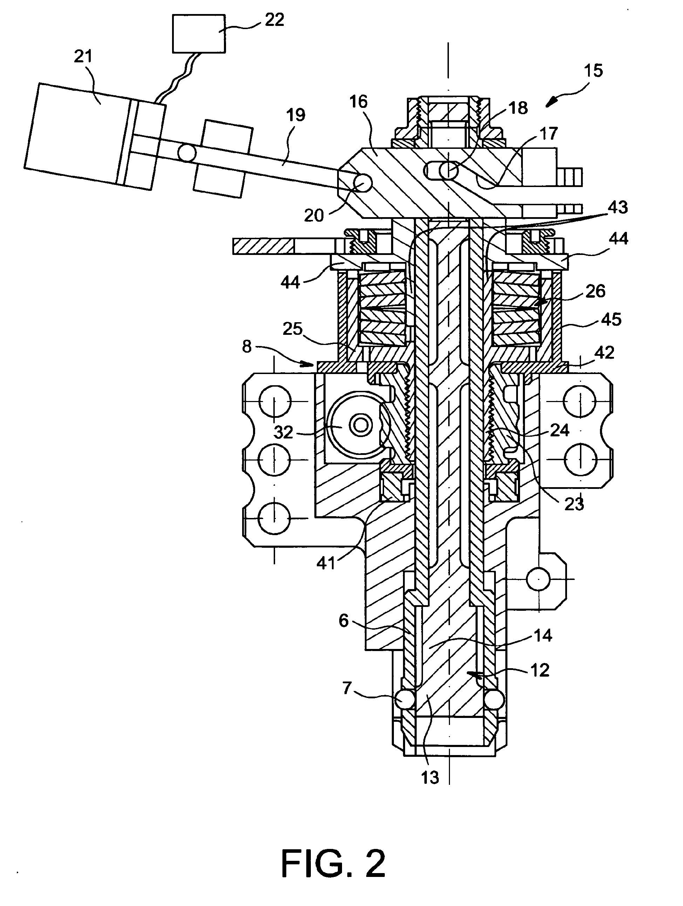

L'invention sera maintenant décrite en liaison aux figures. La figure 1 représente l'agencement du dispositif d'accrochage de la charge et de l'aéronef, et les figures 2, 3 et 4 représentent trois vues différentes du dispositif d'accrochage lui-même.

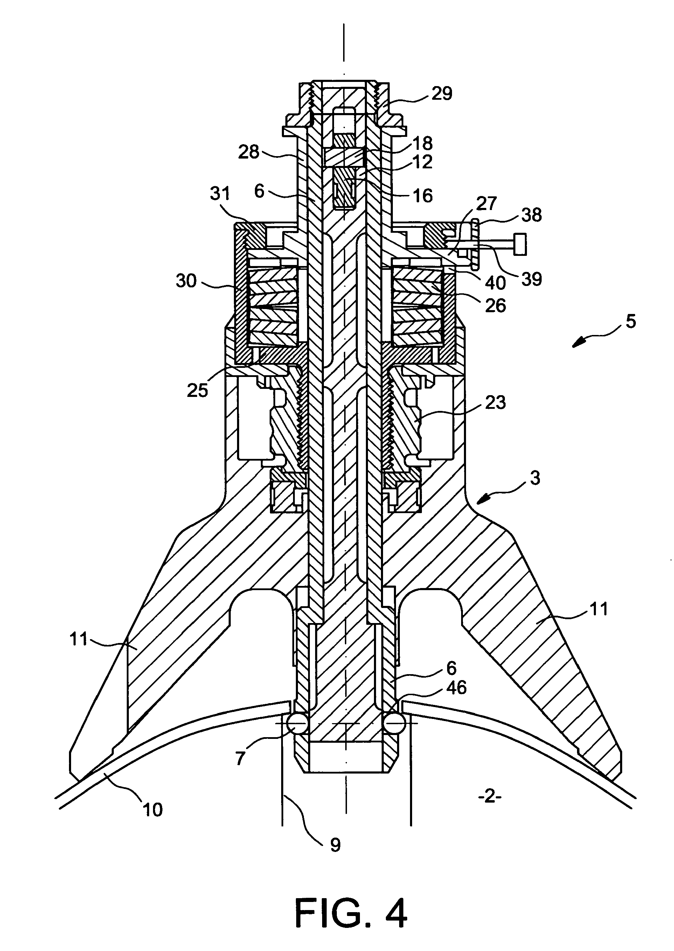

On se reporte à la figure 1. Un aéronef 1 transporte une charge telle qu'un missile 2 sous lui par l'intermédiaire d'un corps d'accrochage 3. Le corps d'accrochage 3 est suspendu à l'aéronef 1 par une paire de verrous 4 et la charge 2 est suspendue au corps d'accrochage 3 par une paire d'autres verrous 5. D'après la figure 2, les verrous 4 et 5 comprennent tous un fourreau 6 engagé dans un logement du corps d'accrochage 3 ou de la charge 2 respectivement, et un cercle de billes 7 logées dans des alésages 46 traversant le fourreau 6 et aptes à saillir hors du fourreau 6 pour assurer le verrouillage par un mécanisme spécialisé. Les verrous 5 inférieurs, sur lesquels porte particulièrement l'invention, sont enrichis de mécanismes de précontrainte 8 tirant les fourreaux 6 vers le haut. Ainsi qu'on le voit à la figure 4, chaque logement 9 de la charge 2 dans lequel l'extrémité du fourreau 6 est enfoncée comprend une collerette 10 sous laquelle les billes 7 s'engagent, et le corps d'accrochage 3 comprend des pattes latérales 11 venant de chaque côté de la charge 2 pour que la surface de celle-ci s'applique sur elles de part et d'autre du logement 9. Cette disposition garantit le déverrouillage de la charge 2, la collerette 10 faisant rentrer les billes 7 dans le fourreau 6 dès que la précontrainte peut se libérer.

On s'intéresse maintenant aux figures 2, 3 et 4. Un piston 12 coulisse dans le fourreau 6. Il comprend une portion inférieure épaissie 13 et une portion amincie 14 plus élevée. En déplaçant le piston 12 par translation dans le fourreau 6, au moyen d'un mécanisme de déverrouillage 15, l'une des portions 13 ou 14 est placée dans cercle de billes 7 pour les faire saillir hors du fourreau 6 ou leur permettre d'y rentrer. Le mécanisme de déverrouillage 15 comprend une tirette 16 munie d'une rainure oblique 17 limitée par deux parties horizontales à des niveaux différents. Un tenon 18 du piston 12 pénètre dans la rainure 17 et y coulisse. Une tige 19 ayant une extrémité engagée dans un oeillet 20 de la tirette 16 peut commander le mouvement de celle-ci pour faire passer le tenon 18 d'une extrémité de la rainure 17 à l'autre et mettre la partie amincie 14 devant les billes 7 sous l'impulsion, par exemple, d'un vérin à gaz 21 dont une chambre est alimentée par les gaz de combustion d'une charge pyrotechnique 22. La tige 19 est articulée à la tige du vérin 21 pour empêcher l'apparition de flexion. Ainsi qu'on le voit à la figure 4, la tirette 16 traverse des rainures du fourreau 6 et du piston 12 et est donc maintenue parfaitement en place.

On s'intéresse maintenant au mécanisme 8 créant la précontrainte. Un écrou 23 est logé dans le corps d'accrochage 3. Il est coaxial au fourreau 6, mais un manchon 24 est intercalé entre eux. Une liaison par filetage est présente entre l'écrou 23 et le manchon 24. Le manchon 24 coulisse librement le long du fourreau 6. Il est muni au sommet d'un plateau supérieur 25. Le plateau supérieur 25 porte un ressort de compression 26 formé ici d'un empilement de rondelles Belleville élastiques. Un couvercle 27 est posé sur l'empilement et contribue à le comprimer. Il est surmonté par un manchon 28 maintenu sous le sommet du fourreau 6 par un capuchon en écrou 29. De plus, le plateau supérieur 25 est prolongé vers le haut par une virole 30 qui entoure le ressort de compression 26. Un couvercle 31 est monté au sommet de la virole 30 par vissage et isole l'intérieur du dispositif.

Une vis sans fin 32 entraîne l'écrou 23. Elle débouche à l'extérieur et comprend une empreinte 33 de rotation par une clé dynamométrique. Elle comporte un frein 34 dont la partie principale est une tête polygonale 35 pouvant coulisser dans le corps d'accrochage 3 mais retenue en rotation par une goupille 36 pénétrant dans une paire de rainures 37 opposées du corps d'accrochage 3. Une seule des rainures 37 est représentée.

Quand la vis sans fin 32 est relâchée, la tête polygonale 35 pénètre dans une empreinte de forme complémentaire de la vis sans fin 32 et la retient en rotation. Quand la clé est introduite dans l'empreinte 33, le frein 34 est repoussé, ce qui fait sortir la tête polygonale 35 de son empreinte, la goupille 36 circulant dans les rainures 37, et la vis sans fin 32 est libérée. Un ressort non représenté ramène ensuite le frein 34 à la position de blocage. Quand la vis sans fin 32 tourne, elle fait tourner l'écrou 23 et déplace le manchon 24 le long du fourreau 6. Le plateau 25 s'élève avec le ressort de compression 26. Le couvercle 27 et le fourreau 6, qui lui est suspendu, s'élèvent librement jusqu'à ce que les billes 7 touchent la collerette 10. Le mouvement subséquent du plateau 25 provoque une compression du ressort 26 dont la valeur peut être corrélée à une précontrainte bien déterminée s'exerçant entre les billes 7 et la collerette 10. Un témoin de précontrainte calibrée est ajouté. Il comprend une ferrure 38 fixée par exemple au manchon 30 et munie d'un doigt 39 repoussé vers l'axe du dispositif par un ressort non représenté à travers un orifice du manchon 30. Quand le plateau 25 s'est approché d'une valeur prédéterminée du couvercle 27, le doigt 39 fixé au manchon 30 vient en face d'un orifice 40 ménagé dans le couvercle 28 et y pénètre, ce qui est perçu par l'opérateur et l'incite à arrêter le mouvement exercé sur la vis sans fin 32. On peut évidemment conserver l'usage d'une clé dynamométrique pour éviter des efforts excessifs pour le dispositif.

L'écrou 23 est maintenu à une hauteur constante entre deux épaulements 41 et 42 du corps d'accrochage 3. Le plateau supérieur 25 et le couvercle 26 sont munis d'une couronne de dents de crabotage vertical 43 qui s'imbriquent les unes dans les autres autour du fourreau 6 et empêchent leur rotation mutuelle. Le couvercle 27 est encore muni d'une paire d'ergots 44 opposés qui pénètrent dans une cage extérieure 45 solidaire du corps d'accrochage 3 afin d'empêcher la rotation de celui-là.

Le dispositif décrit comporte, en action directe, sans intermédiaire, le ressort de compression 26 en contact sur le fourreau 6 donc sans perte de frottement.

Il est adaptable à d'autres formes de logement de la charge, telles que rectangulaires. Dans ce cas, le fourreau 6, le piston 12 deviennent rectangulaires et les billes 7 des galets cylindriques. Pour un logement cylindrique 9 de la charge, il est également possible de remplacer des billes par des tonneaux.

Il est enfin également adaptable aux verrous 4 pour la liaison entre le corps d'accrochage 3 et l'aéronef 1, en ce qui concerne le besoin de précontrainte, la fonction de déverrouillage pouvant être à commande manuelle.

## Revendications

1. Dispositif d'accrochage d'une charge (2) à un aéronef (1), comprenant un fourreau (6) porteur d'un cercle de billes (7) logées dans des alésages traversant le fourreau et utilisées pour retenir la charge, un piston (12) interne au fourreau et comprenant une section épaissie (13) pour faire saillir les billes hors du fourreau et une section amincie (14) pour permettre aux billes de rentrer dans le fourreau, un mécanisme de translation du piston dans le fourreau, un corps d'accrochage (3) de la charge dans lequel le fourreau est retenu et qui comprend des pattes (11) d'appui de la charge, et un mécanisme d'élévation du fourreau comprenant un écrou soutenu par le corps d'accrochage, **caractérisé en ce que** l'écrou (23) est en liaison filetée avec un manchon (24) à plateau supérieur (25) portant un ressort de compression (26) et **en ce qu'**un couvercle (44) couvrant le ressort de compression est solidaire du fourreau.

2. Dispositif d'accrochage selon la revendication 1, **caractérisé en ce qu**'il comprend un témoin (39) de compression calibrée du ressort de compression (26).

3. Dispositif d'accrochage selon l'une quelconque des revendications 1 ou 2, **caractérisé en ce que** le manchon et l'écrou sont coaxiaux aux fourreaux, et le couvercle et le plateau portent des dents (43) de crabot imbriquées.

4. Dispositif d'accrochage selon l'une quelconque des revendications 1 à 3, **caractérisé en ce que** le mécanisme de translation du piston dans le fourreau comprend une tirette (16) à rainure oblique (17) engagée dans une entaille du fourreau et recevant un tenon (18) fixé au piston.

5. Dispositif d'accrochage selon l'une quelconque des revendications 1 à 4, **caractérisé en ce que** le ressort de compression (26) est en contact direct avec le fourreau (6).

## Claims

1. A securing device for a load (2) on an aircraft (1) said device comprising a bushing (6) carrying a ring of balls (7) housed in holes traversing the bushing and used for retaining the load, a piston (12) within the bushing and comprising a thick section (13) for causing the balls to exit the bushing and a thin section (14) for allowing the balls to re-enter the bushing, a mechanism for displacing the piston within the bushing, a securing body (3) for the load in which the bushing is held and which comprises supporting tabs (11) for the load and a mechanism for raising the bushing comprising a screw held by the securing body, **characterised in that** the screw (23) is in threaded connection with a sleeve (24) of an upper plate (25) carrying a compression spring (26) and **in that** a cover (44) covering the compression spring is attached to the bushing.

2. Securing device according to claim 1, **characterised in that** it comprises a calibrated compression indicator (39) for the compression spring (26).

3. Securing device according to any one of claims 1 or 2, **characterised in that** the sleeve and the screw are coaxial with the bushing, and the cover and the plate have interlocking pawl toothing (43).

4. Securing device according to any one of claims 1 to 3, **characterised in that** the piston displacement mechanism in the bushing comprises a pull bolt (16) having an oblique slot (17) engaging in a cradle of the bushing and receiving a pin (18) fixed to the piston.

5. Securing device according to any of claims 1 to 4, **characterised in that** the compression spring (26) is in direct contact with the bushing (6).

## Patentansprüche

1. Vorrichtung zum Befestigen einer Nutzlast (2) an einem Luftfahrzeug (1), umfassend eine Hülse (6), die einen Kranz von Kugeln (7) trägt, welche in die Hülse durchsetzenden Bohrungen aufgenommen sind und verwendet werden, um die Nutzlast zu halten, ferner einen Kolben (12) im Inneren der Hülse, der einen verdickten Abschnitt (13) umfaßt, um die Kugeln aus der Hülse heraus vorstehen zu lassen, sowie einen verdünnten Abschnitt (14), um es den Kugeln zu ermöglichen, in die Hülse zurückzukehren, ferner einen Mechanismus zur Verlagerung des Kolbens in der Hülse, ferner einen Körper (3) zur Befestigung der Nutzlast, in welchem die Hülse gehalten ist und der Klauen (11) zur Aniage für die Nutzlast umfaßt, sowie einen Mechanismus zum Heben der Hülse, umfassend eine Mutter, die von dem Befestigungskörper gehalten wird, **dadurch gekennzeichnet, dass** die Mutter (23) in Gewindeverbindung mit einer Muffe (24) mit einer oberen Platte (25) ist, die eine Kompressionsfeder (26) trägt, und dass ein die Kompressionsfeder überdeckender Deckel (44) mit der Hülse verbunden ist.

2. Befestigungsvorrichtung nach Anspruch 1, **dadurch gekennzeichnet, dass** sie eine Kontrolleinrichtung (39) für eine kalibrierte Kompression der Kompressionsfeder (26) umfaßt.

3. Befestigungsvorrichtung nach einem der Ansprüche 1 oder 2, **dadurch gekennzeichnet, dass** die Muffe und die Mutter koaxial mit der Hülse angeordnet sind, und dass der Deckel und die Platte ineinandergreifende Krallenzähne (43) tragen.

4. Befestigungsvorrichtung nach einem der Ansprüche 1 bis 3, **dadurch gekennzeichnet, dass** der Mechanismus zur Verlagerung des Kolbens in der Hülse eine Ausziehplatte (16) mit einer schrägen Rille (17) umfaßt, die in Eingriff in einer Einkerbung der Hülse ist und einen Zapfen (18) aufnimmt, der am Kolben befestigt ist.

5. Befestigungsvorrichtung nach einem der Ansprüche 1 bis 4, **dadurch gekennzeichnet, dass** die Kompressionsfeder (26) in direktem Kontakt mit der Hülse (6) ist.
